Europäisches Patentamt

(19) European Patent Office

Office européen des brevets

(11) EP 1 249 116 B1

(12) EUROPEAN PATENT SPECIFICATION

(45) Date of publication and mention
of the grant of the patent:
**27.12.2006 Bulletin 2006/52**

(51) Int Cl.:
**H04L 27/233** (2006.01)

(21) Application number: **01957884.8**

(86) International application number:
**PCT/EP2001/007188**

(22) Date of filing: **25.06.2001**

(87) International publication number:
**WO 2002/001825 (03.01.2002 Gazette 2002/01)**

(54) **DETECTION AND CORRECTION OF PHASE JUMPS IN A PHASE SEQUENCE**

DETEKTION UND KORREKTUR VON PHASENSPRÜNGEN IN EINER PHASENFOLGE

DETECTION ET CORRECTION DE VARIATIONS BRUSQUES DE PHASES DANS UNE SEQUENCE
DE PHASES

(84) Designated Contracting States:
**AT BE CH CY DE DK ES FI FR GB GR IE IT LI LU
MC NL PT SE TR**

(30) Priority: **27.06.2000 FR 0008268**

(43) Date of publication of application:
**16.10.2002 Bulletin 2002/42**

(73) Proprietor: **Koninklijke Philips Electronics N.V.
5621 BA Eindhoven (NL)**

(72) Inventors:
• **LEGRAND, Delphine
NL-5656 AA Eindhoven (NL)**

• **BRAJAL, Americo
NL-5656 AA Eindhoven (NL)**
• **CHOULY, Antoine
NL-5656 AA Eindhoven (NL)**

(74) Representative: **van Oudheusden-Perset, Laure E.
et al
Société Civile SPID
156, Boulevard Haussmann
75008 Paris (FR)**

(56) References cited:
**EP-A- 0 349 064       EP-A- 0 648 037
EP-A- 0 940 958       US-A- 4 328 587**

## EP 1 249 116 B1

**Description**

<u>Field of the invention</u>

The invention relates to a communication system comprising at least a transmitter and a receiver intended to receive symbols coming from a PSK modulation, and comprising estimation means for estimating a frequency error relating to a symbol based on a sequence of symbol phases. The invention also relates to a receiver intended to be used in such a communication system.

The invention also relates to a method of detecting and correcting phase jumps in an initial phase sequence of symbols coming from a PSK modulation.

The invention fmally relates to computer program product comprising instructions for implementing such a method.

<u>Background of the invention</u>

Such an estimation algorithm of a frequency error relating to a received symbol based on a phase sequence is described, for example, in paragraph 4.1 (page 107) of the article <<Feedforward Frequency Estimation for PSK : a Tutorial Review>> by M. Morelli and U. Mengali, published in the journal <<European Transactions on Telecommunications, vol. 9, no. 2, March - April 1998>>. This algorithm is known by the name of Tretter algorithm, or least squares method.

To obtain such a phase sequence, it is known that a phase estimation algorithm is used, which estimates the phase relating to a received symbol on the basis of decisions made on various received symbols. For example, the expectation maximization algorithm is used, which is described in paragraph 3.3 of the conference report of the <<International Conference on Communications, New Orleans, USA, 1-5 May, 1994, vol. 2, pp. 940 and 945>>, entitled <<Comparison between digital recovery techniques in the presence of frequency shift>> by F. Daffara and J. Lamour.

The problem posed is the following: in a PSK modulation comprising 2" points, two adjacent points have a phase difference of $\frac{\pi}{2^{n-1}}$. When the frequency error is such that, based on a certain symbol, an error is made in the decision, this error is translated by a phase jump of $\pm\frac{\pi}{2^{n-1}}$ in the sequence of phase estimates obtained. The number of phase jumps that may be obtained depends on the number of symbols contained in the packet and the initial frequency difference.

When the sequence of phases, which are used for applying the Tretter algorithm, includes one or various phase jumps, the frequency estimate obtained is inaccurate. The invention notably has for its object to provide a solution to this problem.

The document EP0648037 describes a method consisting in extracting the phase of each of the complex signals by deleting the unknown phase jumps, in searching in the series of phases obtained for a first phase range of defined length L for which the phase variation is as linear as possible, in determining a second phase range of length L2 greater than L, corresponding to a more precise linear approximation, in iteratively performing linear regressions by the use of a sliding window of length equal to the second phase range L2 in order to delete the residual phase jumps in order to carry out a quadratic regression on the remaining phases and to calculate an overall estimate of the reference phases of the signals of each block, and to perform a comparison of the mean quadratic error between the estimated reference phases and the raw phases obtained by linear regression.

The document EP0349064 describes a method for ensuring the coherent demodulation by digitally processing a continuous-phase modulated signal. The received signal is transposed in the baseband, converted into a digital signal and transferred to a signal processor. Each transmitted data packet has a known preamble sequence of N bits which allows for approximate estimation of the frame-synchronization and the bit-synchronization and also the initial phase and the residual frequency offset. The progressive refinement of the estimation is obtained with two interleaved digital loops: a slow loop for detecting the bit-synchronization and a fast loop effecting intermediate decisions over additional blocks of bits for the estimation of the initial phase and the residual frequency offset.

The document EP0940958 describes an algorithm used for digitally demodulating a frequency modulated signal. The algorithm improves the signal to noise ratio of the demodulated signal for carrier to noise ratios below the fm-threshold. The spikes in the demodulated signal are detected and eliminated. The detection is done by interpolation and other criteria of the unwrapped phase of the frequency modulated signal. The unwrapped phase is calculated as the absolute phase which is not limited to the range $[-\pi, ..., \pi]$.

Summary of the invention

For this purpose, a communication system according to the invention and as described in the opening paragraph, in which the receiver comprises calculation means for calculating a phase sequence, called initial sequence, based on decisions made on symbols, and means for detecting and correcting phase jumps in the initial sequence, to supply a phase sequence, called final sequence, to the frequency error estimation means, is characterized in that the means for detecting and correcting phase jumps comprise:

- modifying means for modifying the initial sequence, so as to produce a plurality of modified sequences which each compensate for a phase jump configuration,
- calculation means for calculating straight line equations which determine the initial sequence and the modified sequences,
- calculation means for calculating for the initial sequence and the modified sequences a mean difference between an initial phase of the initial sequence or a modified phase of the plurality of modified sequences and the phases of the sequences produced by the straight line equation, the final sequence being formed by the sequence whose mean difference is minimal.

Brief description of the drawings

These and other aspects of the invention are apparent from and will be elucidated, by way of non-limitative example, with reference to the embodiment(s) described hereinafter.
In the drawings:

- Fig. 1 is a diagram of an example of a communication system according to the invention,
- Fig. 2 is a flow chart describing the steps of a phase estimation method,
- Fig. 3 is a flow chart diagram describing the operations used by the phase jump correction and detection means according to the invention,
- Fig. 4 is a representation of a phase sequence including a phase jump,
- Fig. 5 is a representation of a phase sequence including two phase jumps,
- Fig. 6 is a representation in the form of curves of the results obtained with the invention.

Description of preferred embodiments

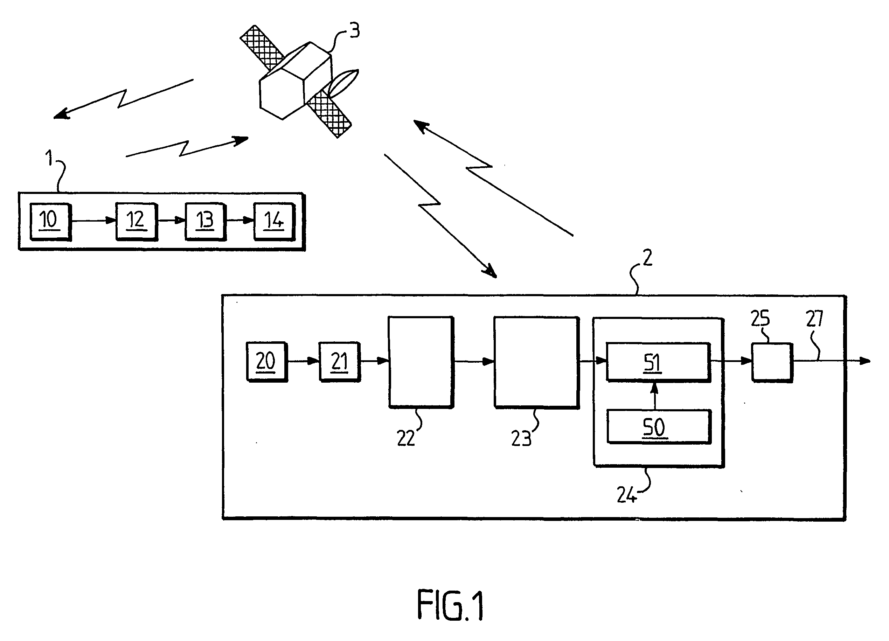

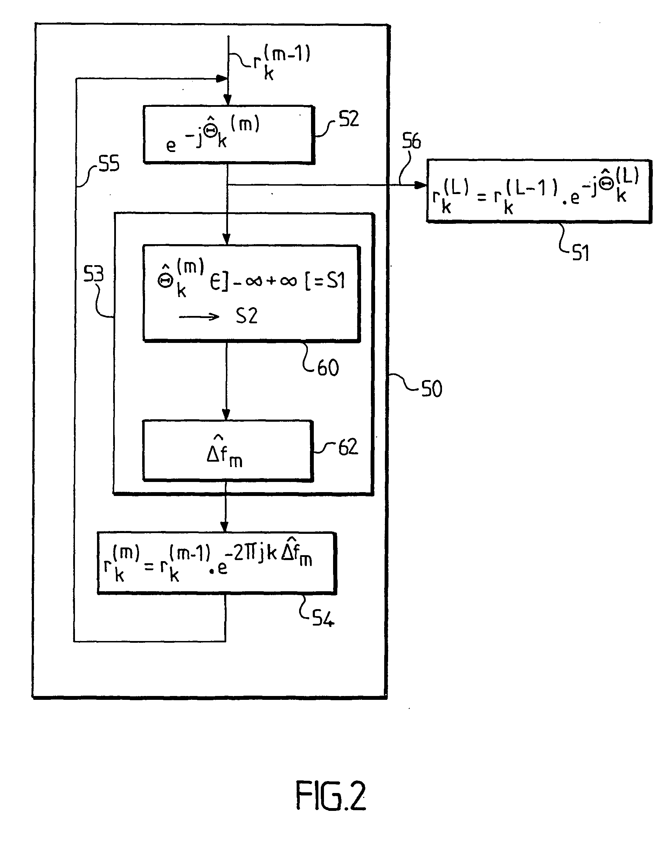

In Fig. 1 is represented an example of a communication system according to the invention. This communication system comprises interactive user terminals 1, which are transmitters within the meaning of the invention, and a head-end station 2, which is a receiver within the meaning of the invention. The head-end station 2 transmits signals in a first frequency band Ku (12-14 GHz). These signals are relayed to interactive user terminals 1 by a satellite 3. The interactive user terminals transmit signals in a second frequency band Ka (20-30 GHz). These signals are relayed to the head-end station 2 by the satellite 3.
Each terminal 1 comprises a data source 10 and channel coding means 12. The channel coding means deliver packets ofN symbols which contain preamble symbols and data symbols. These packets are then transmitted to filter means 13 and, finally, to modulation means 14, which use a local oscillator that has a frequency $f_c$.
The head-end station 2 comprises demodulation means 20 which use a local oscillator that has a frequency $f_c+\Delta f_0/Ts$ (where $\Delta f_0$ is a normalized frequency difference relative to the symbol frequency, and Ts is the duration of the symbols), and an initial phase $\Theta_0$. The head-end station 2 also comprises filter means 21 and sampling means 22, which sample the output signal of the filter 21, to deliver symbols called received symbols. The received symbols are transmitted to frequency recovery means 23 which estimate the normalized frequency difference $\Delta f_0$ and correct the received symbols to compensate for the estimated difference $\hat{\Delta f_0}$. The frequency recovery means 23 deliver frequency-corrected symbols. These frequency-corrected symbols are transmitted to phase recovery means 24. The phase-corrected and frequency-corrected symbols are finally transmitted to channel decoding means 25 which deliver data 27.
In the example described here, the phase recovery means 24 comprise phase and frequency estimation means 50 and phase correction means 51. The phase estimation means 50 are described with reference to Fig. 2. They are formed by a loop intended to be passed through L times. In the following of the description the index m (m=1 to L) is a loop counter. Each value of m thus corresponds to one loop path. The loop comprises:

- conventional phase estimation means 52 (for example, expectation maximization) for producing an initial phase sequence S1 relating to a symbol packet $r_k^{(m-1)}$ (m=1 to L, and k=1 to q, where q≤N),
- means 53 for calculating a frequency error relating to said packet, based on the initial sequence S1,

- means 54 for correcting the frequency of the symbols of the packet, to correct said frequency error,
- loop means 55 which supply the frequency-corrected symbols $r_k^{(m)}$ to phase estimation means 52 for a following path through the loop,
- and loop output means 56 which supply to the phase correction means 51 the phases estimated by the phase estimation means 52 (or, directly, the correction to be made), and the symbols to be corrected.

The calculation means 53 calculate a frequency error estimate $\hat{\Delta f}_m$ relating to the symbols $r_k^{(m-1)}$ of a same packet, based on the initial phase sequence S1 produced by the phase estimation means 52. The values of this phase sequence S1 are between -∞ and +∞. The calculation means 53 comprise:

- means 60 for detecting and correcting phase jumps to correct this initial sequence S1 and to deliver a final sequence S2,
- means 62 for calculating the slope of a straight line which is closest possible to the values of the sequence S2, by applying the Tretter algorithm. The slope obtained forms a frequency error estimate $\hat{\Delta f}_m$ relating to the symbols of the packet. It is this frequency error that is transmitted to the frequency correction means 54. The symbols obtained after frequency correction, $r_k^{(m)} = r_k^{(m-1)} . e^{-2\pi \mathbf{j} \mathbf{k} \hat{\Delta f}_m}$ , are transmitted to the phase estimation means 52 for a new path through the loop. During the last path through the loop (m=L), the symbols $r_k^{(L-1)}$ to be corrected and the phase correction $e^{-j\hat{\Theta}_k^{(L)}}$ to be made to these symbols are transmitted to the phase correction means 51.

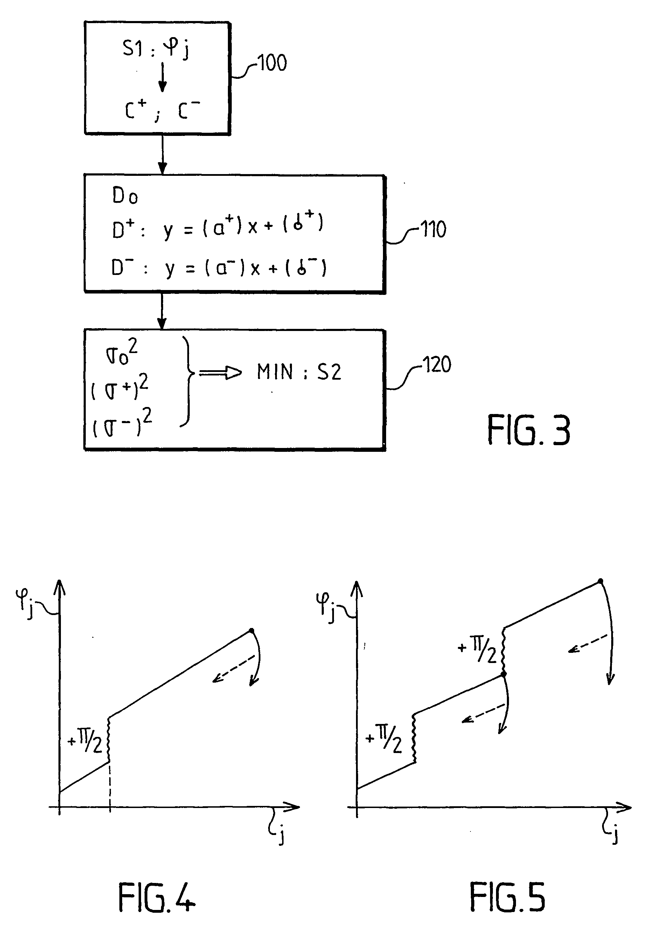

The means 60 for detecting and correcting phase jumps are represented in Fig. 3. They comprise:

- means 100 for modifying the initial sequence to compensate for a plurality of phase jump configurations; the correction means 100 produce a plurality of modified sequences which correspond each to the correction of a phase jump configuration;
- means 110 for calculating straight line equations which determine the initial sequence and the modified sequences,
- calculation means 120 for calculating for the initial sequence and the modified sequences a mean difference between the initial or modified phases and the phases produced by the corresponding straight line equation, said final sequence being formed by the sequence whose mean difference is minimal.

The use of the means 60 for detecting and correcting phase jumps is different and depends on the number of phase jumps one wishes to correct. But the method applied remains the same. The invention can thus be applied to any number of phase jumps. Now two examples of embodiment will be described of the means 60 for detecting and correcting phase jumps:

- a first example, in which the means 60 for detecting and correcting phase jumps are intended to correct a single phase jump of $\pm \dfrac{\pi}{2}$ ;

- a second example, in which the means 60 for detecting and correcting phase jumps are intended to correct two phase jumps of $\pm \dfrac{\pi}{2}$ in the same direction; this second example corresponds to the most probable case where the transmitted packets are ATM cells of 53 octets.

In the examples that will be described, the modification means 100 modify the initial sequence S1 phase by phase. But, for diminishing the number of calculations to be performed, it is possible to modify the sequence phase-group by phase-group. This is equivalent to compensating only for certain configurations of phase jumps.

The first example of embodiment of the means 60 for detecting and correcting phase jumps is described with reference to Fig. 4. In Fig. 4 is represented an example of an initial sequence S1 comprising a phase jump of $+\dfrac{\pi}{2}$. The means 60 for detecting and correcting phase jumps have for their function to detect the position and the direction of the phase jump and then correct it. Therefore, as indicated in Fig. 3, they perform the following operations:

a) The Tretter algorithm is applied to the initial sequence S1 formed by phases $\varphi_j$ (j=0 to q-1) to obtain the straight

line equation $D_0$ which determines this sequence. This equation is written as:

$$D_0: y = a_0.x + b_0$$

with:

$$a_0 = \alpha S' - \beta.S \text{ and } b_0 = \gamma.S - \beta.S'$$

where

$$S = \sum_{j=0}^{q-1} \varphi_j \quad , \quad S' = \sum_{j=0}^{q-1} j.\varphi_j \quad , \alpha = 12/(q.(q^2 - 1)) \quad , \quad \beta = 6/(q.(q+1))$$

and

$$\gamma = 2(2q - 1)/(q(q+1))$$

These expressions can easily be derived from the calculations shown on pages 523 and 524 of the title «Numerical Recipes in C, the art of scientific computing, second edition» by W. H. Press, S. A. Teukolsky, W. T. Vetterling, and B. P. Flannery, published by Cambridge University Press in 1995, while considering that the uncertainty of the phases is constant whatever j.

b) An initial mean difference $(\sigma_0)^2$ is calculated between the phases $\varphi_j$ of the initial sequence S1 and the phases y (j) coming from the straight line equation $D_0$.

$$(\sigma_0)^2 = \frac{1}{q} \sum_{j=0}^{q-1} \left| \varphi_j - (a_0.j + b_0) \right|^2$$

c) The initial sequence S1 is run through point by point by starting from the end (symbol of rank q-1); the index i is a counter that indicates the position of the phase jump (i=q-1, ...,0).

d) With each step the phases $\varphi j$ (j = q-i,...,q-1) are modified by $+ \dfrac{\pi}{2}$, so that a modified sequence $C_i^+$ is obtained.

This sequence $C_i^+$ is thus constituted by phases

$$\varphi_j^+ = \begin{cases} \varphi_j \quad \overset{<->}{\text{pour}} \; j = 0,...,q-i-1 \\ \varphi_j + \dfrac{\pi}{2} \overset{<->}{\text{pour}} \; j = q-i,...,q-1 \end{cases} \qquad < for >$$

e) With each step one straight line equation $D_i^+$ is calculated, which straight lines determine the modified sequence $C_i^+$. This equation is written as:

$$D_i^+ : y = (a_i)^+.x + (b_i)^+$$

with :

$$a_i^+ = \alpha.(S_i')^+ - \beta.(S_i)^+ \text{ and } b_i^+ = \gamma.(S_i)^+ - \beta.(S_i')^+$$

where

$$(S_i)^+ = \sum_{j=0}^{q-1} \varphi_j^+ = S + i.\frac{\pi}{2} \text{ and } (S_i')^+ = \sum_{j=0}^{q-1} j.\varphi_j^+ = S' + \frac{\pi}{2}.i(q - \frac{(i+1)}{2})$$

that is to say,

$$a_i^+ = a_0 + \alpha.\frac{\pi}{2}.i.(q - \frac{i+1}{2}) - \beta.i.\frac{\pi}{2} = a_0 + (A_i^+) \text{ with } (A_i^+) = \alpha.\frac{\pi}{2}.i.(q - \frac{i+1}{2}) - \beta.i.\frac{\pi}{2}$$

and

$$b_i^+ = b_0 + \gamma.i.\frac{\pi}{2} - \beta.\frac{\pi}{2}.i.(q - \frac{i+1}{2}) = b_0 + (B_i^+) \text{ with } (B_i^+) = \gamma.i.\frac{\pi}{2} - \beta.\frac{\pi}{2}.i.(q - \frac{i+1}{2})$$

f) For each modified sequence $C_i^+$ is calculated a mean difference $(\sigma_i^+)^2$ between the phases $\varphi_j^+$ of the modified sequence $C_i^+$ and the phases y(j) coming from the straight line equation $D_i^+$.

$$(\sigma_i^+)^2 = \frac{1}{q}\sum_{j=0}^{q-1} \left| \varphi_j^+ - [(a_i)^+.j + (b_i)^+] \right|^2$$

g) The operations c) to f) are repeated while the phases φj (j = q-i,...,q-1) of the initial sequence of $-\frac{\pi}{2}$ are modified.

For each value of i, another modified sequence $C_i^-$ is obtained. It is formed by the phases

$$\varphi_j^- = \begin{cases} \varphi_j & \text{for } j = 0,...,q-i-1 \\ \varphi_j - \frac{\pi}{2} & \text{for } j = q-i,...q-1 \end{cases}$$

h) The final sequence S2 is formed by the sequence whose mean difference is minimal.

For a less complex use, the mean differences $(\sigma_i^+)^2$ are calculated based on the initial mean difference $(\sigma_0)^2$. One obtains:

$$(\sigma_i{}^+)^2 = \sigma_0{}^2 + 2\pi \sum_{j=q-i}^{q-1} \varphi_j - 2.(B_i{}^+).S - 2(A_i{}^+).S'$$

$$+ b_0 \left[(A_i{}^+).q.(q-1) + 2.(B_i{}^+).q - \pi.i\right]$$

$$+ a_0 \left[\frac{(A_i{}^+).q.(q-1).(2q-1)}{3} + (B_i{}^+).q.(q-1) - \frac{\pi}{2}.i.(2q-i-1)\right]$$

$$+ q.(B_i{}^+)^2 + (A_i{}^+).(B_i{}^+).q.(q-1) + \frac{(A_i{}^+)^2.q.(q-1).(2q-1)}{6} - \frac{\pi}{2}.(A_i{}^+).i.(2q-i-1) - \pi.(B_i{}^+).i + \frac{\pi^2}{4}.i$$

The mean difference $(\sigma_i{}^-)^2$ is obtained by replacing in the expression of $(\sigma_i{}^+)^2$ :

$$\pi \text{ by } - \pi, (A_i{}^+) \text{ by } - (A_i{}^-) \text{ and } (B_i{}^+) \text{ by } - (B_i{}^-).$$

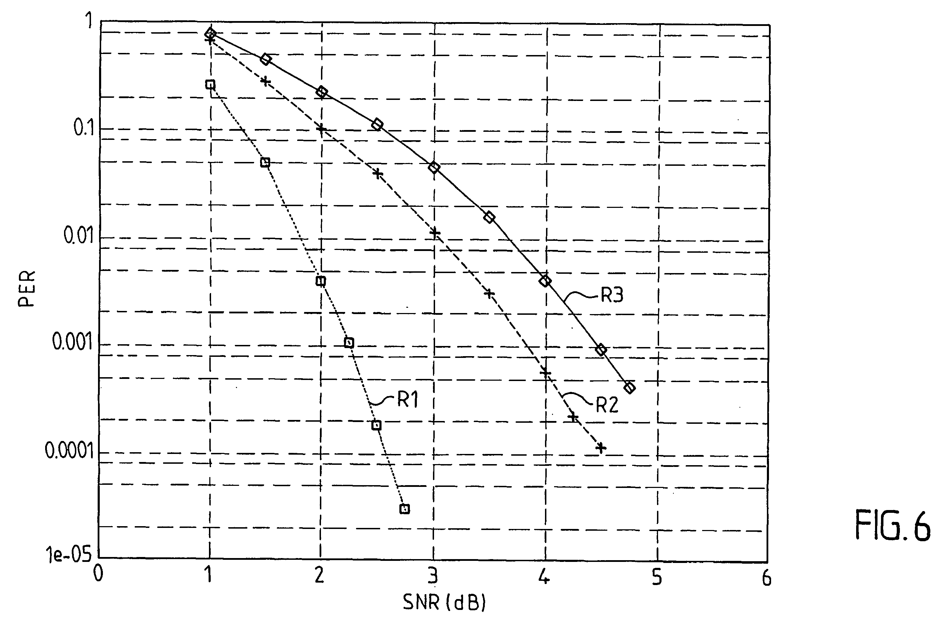

The second example of embodiment of the means 60 for detecting and correcting phase jumps is described with reference to Fig. 5. In Fig. 5 is shown an example of an initial sequence S1 comprising two phase jumps of $+\frac{\pi}{2}$ .

At step **d)** the phases are modified by $+\frac{\pi}{2}$ for the p symbols from rank q-k-p to q-k-1, and by + $\pi$ for the k symbols from rank q-k to q (k varies between 1 and q and p varies between 1 and q-k). The modified sequences obtained at step **d)** are thus written as:

$$\varphi_j{}^+ = \begin{cases} \varphi_j \text{ for } j = 0,\dots,q-k-p-1 \\ \varphi_j + \frac{\pi}{2} \text{ for } j = q-k-p,\dots,q-k-1 \\ \varphi_j + \pi \text{ for } j = q-k,\dots,q \end{cases}$$

$$\varphi_j{}^- = \begin{cases} \varphi_j \text{ for } j = 0,\dots,q-k-p-1 \\ \varphi_j - \frac{\pi}{2} \text{ for } j = q-k-p,\dots,q-k-1 \\ \varphi_j - \pi \text{ for } j = q-k,\dots,q \end{cases}$$

And the straight line equations calculated in step **e)** are written as:

$$D_{p,k}{}^+ : y = (a_{p,k}{}^+).x + (b_{p,k}{}^+)$$

with :

$$(a_{p,k})^+ = \alpha.(S_{p,k}')^+ - \beta.(S_{p,k})^+ \text{ and } (b_{p,k})^+ = \gamma.(S_{p,k})^+ - \beta.(S_{p,k}')^+$$

where

$$(S_{p,k})^+ = \sum_{j=0}^{q-1} \varphi_j^{\ +} = S + p.\frac{\pi}{2} + k.\pi$$

and

$$(S_{p,k}')^+ = \sum_{j=0}^{q-1} j.\varphi_j^{\ +} = S' + \frac{\pi}{2}.p.(q-k-\frac{p+1}{2}) + \pi.k.(q-\frac{(k+1)}{2})$$

that is to say,

$$a_{p,k}^{\ +} = a_0 + \alpha[\frac{\pi}{2}.p.(q-k-\frac{p+1}{2}) + \pi.k.(q-\frac{k+1}{2})] - \beta[p\frac{\pi}{2} + k\pi] = a_0 + (A_{p,k}^{\ +})$$

with

$$(A_{p,k}^{\ +}) = \alpha[\frac{\pi}{2}.p.(q-k-\frac{p+1}{2}) + \pi.k.(q-\frac{k+1}{2})] - \beta[p\frac{\pi}{2} + k\pi]$$

and

$$b_{p,k}^{\ +} = b_0 + \gamma[p\frac{\pi}{2} + k\pi] - \beta[\frac{\pi}{2}.p.(q-k-\frac{p+1}{2}) + \pi.k.(q-\frac{k+1}{2})] = b_0 + (B_{p,k}^{\ +})$$

with

$$(B_{p,k}^{\ +}) = \gamma[p\frac{\pi}{2} + k\pi] - \beta[\frac{\pi}{2}.p.(q-k-\frac{p+1}{2}) + \pi.k.(q-\frac{k+1}{2})]$$

For a less complex implementation, the mean differences $(\sigma_{p,k}^{\ +})^2$ are calculated based on the initial mean difference $(\sigma_0)^2$. The following expression is obtained:

$$(\sigma_{p,k}^{+})^2 = \sigma_0^{\ 2} + 2\pi \sum_{j=q-k}^{q-1} \varphi_j + \pi \sum_{j=q-k-p}^{q-k-1} \varphi_j - 2.(B_{p,k}^{+}).S - 2(A_{p,k}^{+}).S'$$

$$+ b_0 [(A_{p,k}^{+}).q.(q-1) + 2.(B_{p,k}^{+}).q - \pi(p+2k)]$$

$$+ a_0 \left[ \frac{(A_{p,k}^{+}).q.(q-1).(2q-1)}{3} + (B_{p,k}^{+}).q.(q-1) - \frac{\pi}{2}.p.(2q-2k-p-1) - \pi.k.(2q-k-1) \right]$$

$$+ q.(B_{p,k}^{+})^2 + (A_{p,k}^{+}).(B_{p,k}^{+}).q.(q-1) + \frac{(A_{p,k}^{+})^2.q.(q-1).(2q-1)}{6}$$

$$- \frac{\pi}{2}.(A_{p,k}^{+}).p.(2q-2k-p-1) - \pi.(A_{p,k}^{+}).k.(2q-k-1) - \pi.(B_{p,k}^{+}).(p+2k) + \frac{\pi^2}{4}.(p+4k)$$

The mean difference $(\sigma_{p,k}^{-})^2$ is derived from the expression $(\sigma_{p,k}^{+})^2$ by replacing $\pi$ by $-\pi$, $(A_{p,k}^{+})$ by $-(A_{p,k}^{-})$ and $(B_{p,k}^{+})$ by $-(B_{p,k}^{-})$.

It is evident that the means that have just been described are calculation means advantageously used in the form of a computer program intended to be executed by a microprocessor placed in the receiver.

In Fig. 6 are shown the results obtained thanks to the invention in a system as described with reference to Figs. 1 and 2. The curves of Fig. 6 represent the packet error rate (PER) plotted against the signal-to-noise ratio (SNR) in the following three cases:

- curve R3: when the phase jumps are not detected;
- curve R2: when the phase jumps are detected and corrected with the method according to the invention;
- curve R1: for a Gaussian channel (no imperfection as regards either phase or frequency). These curves have been obtained via:

- a QPSK modulation,
- a random initial frequency error $\Delta f_0$ comprised between -1% and +1% of the symbol frequency,
- a random initial phase error $\theta_0$ comprised between $-\pi$ et $+\pi$,
- packets which comprise a known preamble of 48 symbols $[a_1, ..., a_{48}]$ and a payload part $[a_{49}, ..., a_{592}]$ of 544 symbols,
- a frequency recovery algorithm (utilized by the means 23), which uses the packet preambles, and which is applied before the phase estimation, so that the residual frequency error $\Delta f_1$ before the phase estimation is lower than or equal to 0.3% of the symbol frequency,
- phase estimation means 50 which are formed by a loop which is passed through L=2 times,
- on transmission, a Reed Solomon coding and a convolution coding which is punctured in 64 states.

The invention is not restricted to the embodiments that have just been described by way of example. More particularly, it relates to any type of receiver that utilizes a frequency error correction device of the Tretter type and, upstream of this device, a phase estimation device based on decisions made on the received symbols.

Moreover, the number of phase jumps that may be detected and corrected by applying this method is arbitrary. When the transmitted data packets are longer, it is possible to have more than two phase jumps. In that case, in order not to complicate the calculations too much, one advantageously chooses to divide the data packets into smaller portions so as to be in the same position again where one has a maximum of two phase jumps per packet portion. The method described above is thus applied to each portion of the packet. It provides the position and the direction of the various phase jumps. The phases are then corrected by a multiple of $\frac{\pi}{2}$ as a function of the direction of the jumps and their number. Then, the Tretter algorithm is applied to this corrected sequence to obtain the final frequency estimate. In order to avoid a jump occurring between two portions of a packet, it is desirable to provide an overlap between the various portions of the same packet.

The method proposed is generally used for any MPSK modulation by considering phase jumps of $\pm 2\pi / M$ (instead of $\pm \pi / 2$ for a QPSK modulation).

**Claims**

1. A communication system comprising at least a transmitter (1) and a receiver (2) intended to receive symbols coming from a PSK modulation, and comprising estimation means (62) for estimating a frequency error relating to a symbol based on a sequence of symbol phases, the receiver comprising calculation means (52) for calculating a phase sequence, called initial sequence (S1), based on decisions made on symbols, and means for detecting and correcting phase jumps in the initial sequence, to supply a phase sequence, called final sequence (S2), to the frequency error estimation means (62),
   **characterized in that** the means for detecting and correcting phase jumps comprise:

   - modifying means (100) for modifying the initial sequence (S1) so as to produce a plurality of modified sequences $(C_i^+; C_i^-; C_{p,k}^+; C_{p,k}^-;)$, which each compensate for a phase jump configuration,
   - calculation means (110) for calculating straight line equations which determine the initial sequence (D0) and the modified sequences $(D_i^+; D_i^-; D_{p,k}^+; D_{p,k}^-)$,
   - calculation means (120) for calculating for the initial sequence and the modified sequences a mean difference between an initial phase of the initial sequence or a modified phase of the plurality of modified sequences and the phases of the sequences produced by the straight line equation $(\sigma_0^2; (\sigma_i^+)^2; (\sigma_i^-)^2; (\sigma_{p,k}^+)^2; (\sigma_{p,k}^-)^2;)$, the final sequence being formed by the sequence whose mean difference is minimal.

2. A communication system as claimed in claim 1, **characterized in that** the initial sequence is modified phase-group by phase-group.

3. A receiver intended to be used in a communication system as claimed in one of the claims 1 or 2, comprising

   - calculation means (52) for calculating a phase sequence, called initial sequence, based on decisions made on symbols, and
   - means for detecting and correcting phase jumps in the initial sequence,

   **characterized in that**
   said means for detecting and correcting phase jumps comprise:

   - modifying means (100) for modifying said initial sequence (S1) so as to produce a plurality of modified sequences $(C_i^+ ; C_i^- ; C_{p,k}^+; C_{p,k}^-)$, which each compensate for a phase jump configuration,
   - calculation means (110) for calculating straight line equations which determine the initial sequence $(D_0)$ and the modified sequences $(D_i^+; D_i^-; D_{p,k}^+; D_{p,k}^-)$
   - calculation means (120) for calculating for the initial sequence and the modified sequences a mean difference between the initial or modified phases and the phases produced by the corresponding straight line equation $(\sigma_0^2; (\sigma_i^+)^2; (\sigma_i^-)^2; (\sigma_{p,k}^+)^2 ; (\sigma_{p,k}^-)^2)$, said final sequence being formed by the sequence whose mean difference is minimal.
   - a step of detecting and correcting phase jumps in the initial sequence, to produce a phase sequence, called final sequence, used for the estimation of a frequency error,
   the method is **characterized in that** it further comprises:
   - a step (c, d) of modifying the initial sequence (S1) so as to produce a plurality of modified sequences which each compensate for a phase jump configuration,
   - a step of calculating straight line equations which determine the initial sequence (a) and the modified sequences (e),
   - a calculation step of calculating for the initial sequence (a) and the modified sequences (f) a mean difference between an initial phase of the initial sequence or a modified phase of the plurality of modified sequences and the phases of the sequences produced by the straight line equation, the final sequence being formed by the sequence whose mean difference is minimal.

4. A method of detecting and correcting phase jumps in an initial sequence of symbol phases coming from a PSK modulation, the initial sequence being based on decisions made on symbols, comprising:

   - a step of calculating a phase sequence, called initial sequence, based on decisions made on symbols, and

5. A method of detecting and correcting phase jumps as claimed in claim 4, **characterized in that** said initial sequence is modified phase-group by phase-group.

**6.** A computer program product comprising instructions for implementing all the steps of a method of detecting and correcting phase jumps as claimed in claims 4 and 5 when said program is executed by a processor.

**Patentansprüche**

**1.** Kommunikationssystem, umfassend mindestens einen Sender (1) und einen Empfänger (2), der dazu bestimmt ist, Symbole zu empfangen, die von einer PSK-Modulation kommen, und umfassend Schätzmittel (62), um einen Frequenzfehler in Bezug auf ein Symbol zu schätzen, das auf einer Folge von Symbolphasen basiert, wobei der Empfänger Berechnungsmittel (52) umfasst, um eine Phasenfolge, Anfangsfolge (S1) genannt, auf der Basis von Entscheidungen zu berechnen, die an Symbolen getroffen werden, und Mittel zur Detektion und Korrektur von Phasensprüngen in der Anfangsfolge, um eine Phasenfolge, Endfolge (S2) genannt, dem Frequenzfehlerschätzmittel (62) zuzuführen,
**dadurch gekennzeichnet, dass** die Mittel zur Detektion und Korrektur von Phasensprüngen umfassen:

- Änderungsmittel (100) zum Verändern der Anfangsfolge (S1), um eine Vielzahl von modifizierten Folgen ($C_i^+$; $C_i^-$;$C_{p,k}^+$;$C_{p,k}^-$) zu erzeugen, die jede eine Phasensprungkonfiguration kompensieren,
- Berechnungsmittel (110) zum Berechnen von Geraden-Gleichungen, welche die Anfangsfolge ($D_0$) und die modifizierten Folgen ($D_i^+$; $D_i^-$; $D_{p,k}^+$; $D_{p,k}^-$) bestimmen,
- Berechnungsmittel (120), um für die Anfangsfolge und die modifizierten Folgen eine mittlere Differenz zwischen einer Anfangsphase der Anfangsfolge oder einer modifizierten Phase der Vielzahl von modifierten Folgen und den Phasen der Folgen zu berechnen, die von der Geraden-Gleichung ($\sigma_0^2$;$(\sigma_i^+)^2$;$(\sigma_i^-)^2$;$(\sigma_{p,k}^+)^2$;$(\sigma_{p,k}^-)^2$) erzeugt wurden, wobei die Endfolge durch die Folge gebildet wird, deren mittlere Differenz minimal ist.

**2.** Kommunikationssystem nach Anspruch 1, **dadurch gekennzeichnet, dass** die Anfangsfolge phasengruppenweise modifiziert wird.

**3.** Empfänger zur Verwendung in einem Kommunikationssystem nach einem der Ansprüche 1 oder 2, umfassend

- Berechnungsmittel (52) zum Berechnen einer Phasenfolge, Anfangsfolge genannt, auf der Basis von Entscheidungen, die an Symbolen getroffen werden, und
- Mittel zur Detektion und Korrektur von Phasensprüngen in der Anfangsfolge, **dadurch gekennzeichnet, dass**

diese Mittel zur Detektion und Korrektur von Phasensprüngen umfassen:

- Änderungsmittel (100) zum Verändern der Anfangsfolge (S1), um eine Vielzahl von modifizierten Folgen ($C_i^+$; $C_i^-$; $C_{p,k}^+$;$C_{p,k}^-$) zu erzeugen, die jede eine Phasensprungkonfiguration kompensieren,
- Berechnungsmittel (110) zum Berechnen von Geraden-Gleichungen, die die Anfangsfolge ($D_0$) und die modifizierten Folgen ($D_i^+$ ; $D_i^-$; $D_{p,k}^+$; $Dp_{,k}^-$) bestimmen,
- Berechnungsmittel (120), um für die Anfangsfolge und die modifizierten Folgen eine mittlere Differenz zwischen der Anfangsphase oder den modifizierten Phasen und den Phasen zu berechnen, die durch die entsprechende Geraden-Gleichung ($\sigma_0^2$;$(\sigma_i^+)^2$;$(\sigma_i^-)^2$;$(\sigma_{p,k}^+)^2$;$(\sigma_{p,k}^-)^2$) erzeugt wurden, wobei die Endfolge durch die Folge gebildet wird, deren mittlere Differenz minimal ist.

**4.** Verfahren zur Detektion und Korrektur von Phasensprüngen in einer Anfangsfolge von Symbolphasen, die von einer PSK-Modulation kommen, wobei die Anfangsfolge auf Entscheidungen basiert, die an Symbolen getroffen werden, umfassend:

- einen Schritt des Berechnens einer Phasenfolge, Anfangsfolge genannt, auf der Basis von Entscheidungen, die an Symbolen getroffen werden, und
- einen Schritt des Erkennens und Korrigierens von Phasensprüngen in der Anfangsfolge, um eine Phasenfolge zu erzeugen, Endfolge genannt, die zur Schätzung eines Frequenzfehlers verwendet wird, wobei das Verfahren **dadurch gekennzeichnet ist, dass** es außerdem umfasst:
- einen Schritt (c, d) des Modifizierens der Anfangsfolge (S 1), um eine Vielzahl von modifizierten Folgen zu erzeugen, die jede eine Phasensprungkonfiguration kompensieren,
- einen Schritt des Berechnens von Geraden-Gleichungen, welche die Anfangsfolge (a) und die modifizierten Folgen (e) bestimmen,
- einen Berechnungsschritt, um für die Anfangsfolge (a) und die modifizierten Folgen (f) eine mittlere Differenz zwischen einer Anfangsphase der Anfangsfolge oder einer modifizierten Phase der Vielzahl von modifizierten Folgen und den Phasen der Folgen zu berechnen, die von der Geraden-Gleichung erzeugt wurden, wobei die Endfolge durch die Folge gebildet wird, deren mittlere Differenz minimal ist.

**5.** Verfahren zur Detektion und Korrektur von Phasensprüngen nach Anspruch 4, **dadurch gekennzeichnet, dass** die Anfangsfolge phasengruppenweise modifiziert wird.

**6.** Computerprogrammprodukt, umfassend Anweisungen zur Implementierung jedes Schritts eines Verfahrens zur Detektion und Korrektur von Phasensprüngen nach den Ansprüchen 4 und 5, wenn dieses Programm von einem Prozessor ausgeführt wird.

**Revendications**

**1.** Système de communications comprenant au moins un émetteur (1) et un récepteur (2) destiné à recevoir des symboles provenant d'une modulation PSK, et comprenant des moyens d'estimation (62) pour estimer une erreur de fréquence relative à un symbole sur la base d'une séquence de phases de symbole, le récepteur comprenant des moyens de calcul (52) pour calculer une séquence de phases, appelée séquence initiale (S1), sur la base de décisions prises à propos de symboles, et des moyens pour détecter et corriger des variations brusques de phase dans la séquence initiale, pour fournir une séquence de phases, appelée séquence finale (S2), aux moyens d'estimation d'erreur de fréquence (62),
**caractérisé en ce que** les moyens de détection et de correction de variations brusques de phase comprennent:

- des moyens de modification (100) pour modifier la séquence initiale (S1) afin de produire une pluralité de séquences modifiées ($C_i^+$; $C_i^-$; $C_{p,k}^+$; $C_{p,k}^-$ ;), dont chacune compense une configuration de variation brusque de phase,
- des moyens de calcul (110) pour calculer des équations de lignes droites qui déterminent la séquence initiale (D0) et les séquences modifiées ($D_i^+$; $D_i^-$; $D_{p,k}^+$; $D_{p,k}^-$),
- des moyens de calcul (120) pour calculer, pour la séquence initiale et les séquences modifiées, une différence moyenne entre une phase initiale de la séquence initiale ou une phase modifiée de la pluralité de séquences modifiées et les phases des séquences produites par l'équation de lignes droites ($\sigma_0^2$; $(\sigma_i^+)^2$; $(\sigma_i^-)^2$; $(\sigma_{p,k}^+)^2$; $(\sigma_{p,k}^-)^2$ ;), la séquence finale étant formée par la séquence dont la différence moyenne est minimale.

**2.** Système de communications selon la revendication 1, **caractérisé en ce que** la séquence initiale est modifiée groupe de phases par groupe de phases.

**3.** Récepteur destiné à être utilisé dans un système de communications selon l'une des revendications 1 ou 2, comprenant

- des moyens de calcul (52) pour calculer une séquence de phases, appelée séquence initiale, sur la base de décisions prises à propos de symboles, et
- des moyens de détection et de correction de variations brusques de phase dans la séquence initiale,

**caractérisé en ce que**
lesdits moyens de détection et de correction de variations brusques de phase comprennent:

- des moyens de modification (100) pour modifier ladite séquence initiale (S1) afin de produire une pluralité de séquences modifiées ($C_i^+$;$C_i^-$;$C_{p,k}^+$;$C_{p,k}^-$ ), dont chacune compense une configuration de variation brusque de phase,
- des moyens de calcul (110) pour calculer des équations de lignes droites qui déterminent la séquence initiale ($D_0$) et les séquences modifiées ($D_i^+$; $D_i^-$; $D_{p,k}^+$; $D_{p,k}^-$)
- des moyens de calcul (120) pour calculer, pour la séquence initiale et les séquences modifiées, une différence moyenne entre la phase initiale ou les phases modifiées et les phases produites par l'équation de lignes droites correspondante ($\sigma_0^2$ ;$(\sigma_i^+)^2$ ; $(\sigma_i^-)^2$;$(\sigma_{p,k}^+)^2$ ;$(\sigma_{p,k}^-)^2$), ladite séquence finale étant formée par la séquence dont la différence moyenne est minimale.

**4.** Procédé de détection et de correction de variations brusques de phase dans une séquence initiale de phases de symbole provenant d'une modulation PSK, la séquence initiale étant basée sur des décisions prises à propos de symboles, comprenant:

- une étape de calcul d'une séquence de phases, appelée séquence initiale, basée sur des décisions prises à propos de symboles, et
- une étape de détection et de correction de variations brusques de phase dans la séquence initiale, pour produire une séquence de phases, appelée séquence finale, utilisée pour l'estimation d'une erreur de fréquence,

le procédé est **caractérisé en ce qu'**il comprend en outre:

- une étape (c,d) de modification de la séquence initiale (S1) afin de produire une pluralité de séquences modifiées dont chacune compense une configuration de variation brusque de phase,
- une étape de calcul d'équations de lignes droites qui déterminent la séquence initiale (a) et les séquences modifiées (e),
- une étape de calcul pour calculer, pour la séquence initiale (a) et les séquences modifiées (f), une différence moyenne entre une phase initiale de la séquence initiale ou une phase modifiée de la pluralité de séquences modifiées et les phases des séquences produites par l'équation de lignes droites, la séquence finale étant formée par la séquence dont la différence moyenne est minimale.

5. Procédé de détection et de correction de variations brusques de phase selon la revendication 4, **caractérisé en ce que** ladite séquence initiale est modifiée groupe de phases par groupe de phases.

6. Produit de programme informatique comprenant des instructions pour implémenter toutes les étapes d'un procédé de détection et de correction de variations brusques de phase selon les revendications 4 et 5 lorsque ledit programme est exécuté par un processeur.

FIG.1

FIG.2

FIG. 3

FIG.4

FIG.5

FIG.6

EP 1 249 116 B1